# EUROPEAN PATENT SPECIFICATION

(11) **EP 2 890 483 B1**
(45) Date of publication and mention of the grant of the patent: **06.02.2019**
(21) Application number: 13833957.7
(22) Date of filing: 07.08.2013
(51) Int. Cl.: B01J 39/00, B01J 8/00

(54) **PROCESS FOR CARBONYL SULFIDE CAPTURE VIA ION EXCHANGE RESINS**
VERFAHREN ZUR CARBONYLSULFIDERFASSUNG ÜBER IONENAUSTAUSCHERHARZE
PROCÉDÉ DE CAPTURE DE SULFURE DE CARBONYLE PAR L'INTERMÉDIAIRE DE RÉSINES ÉCHANGEUSES D'IONS

(30) Priority: 31.08.2012 US 201261695556 P; 15.03.2013 US 201361786845 P
(43) Date of publication of application: 08.07.2015
(73) Proprietor: Lanxess Sybron Chemicals Inc., Birmingham, New Jersey 08011 (US); Lanxess Deutschland GmbH, 50569 Cologne (DE)
(72) Inventor: TIRIO, Anthony P, Pittsburgh, Pennsylvania 15235 (US); WAGNER, Rudolf, 51061 Cologne (DE)
(74) Representative: Wichmann, Birgid
(86) International application number: PCT/US2013/053884
(87) International publication number: WO 2014/035623

(56) References cited:
- GB-A- 1 296 889
- US-A- 2 309 871
- US-A- 3 282 831
- US-A1- 2011 088 550
- US-A1- 2011 088 550

## Description

The present invention relates to the removal of carbonyl sulfide ("CQS")using the ion exchange material from gas sources containing carbonyl sulfide and from liquid sources containing carbonyl sulfide.

Applicant has now found the use of an ion exchange material comprising an aminoalkylated bead polymer in the removal carbonyl sulfide from industrial applications, as compared to other materials often used In removal applications,

There is broadly contemplated, in accordance with claim 1, a process for removing carbonyl sulfide from a carbonyl sulfide containing gaseous or liquid stream, comprising: providing an ion exchange resin, contacting said ion exchange resin with said carbonyl sulfide containing gaseous or liquid stream, sorbing a portion of said carbonyl sulfide from carbonyl sulfide containing gaseous or liquid stream by the ion exchange resin, thereby forming a carbonyl-sulfide-form ion exchange resin, and de-sorbing the attached carbonyl sulfide from the carbonyl-sulfide-form ion exchange resin, thereby increasing the capacity of the ion exchange resin to re-sorb carbonyl sulfide.

In an embodiment, said ion exchange resin is a polystyrene polymer based resin, which is crosslinked via the use of divinylbenze, and is functionalized with primary amine groups including benzylamine and wherein the resin is produced by a phthalimide process.

In another embodiment of the invention, the aforementioned gas stream is an industrial gas and/or industrial gas stream, such as natural gas, produced gas, cracked gas synthesis gas streams, light hydrocarbons such as propane, propylene, ethane, and ethylene.

In another embodiment of the invention, the aforementioned liquid stream is an industrial liquid stream, such as, for example, liquefied petroleum gas streams, such as liquefied hydrocarbon streams, for example those from natural gas production, petroleum refining, and/or ethylene production. Examples thereof include streams of propane, propylene, ethane, and/or ethylene primarily in their liquid phase.

For a better understanding of the present invention, together with other and further features and advantages thereof, reference is made to the following description.

Document US3282831 A discloses a chemical method of regenerating an anion exchange resin containing adsorbed carbonyl sulfide.

Document EP2490789 B1 discloses a process for removing carbon dioxide from a CO₂-containing stream.

### BRIEF DESCRIPTION OF THE SEVERAL VIEWS OF THE DRAWINGS

Figure 1 schematically illustrates the laboratory equipment employed in the examples set for forth herein.
Figure 2 schematically illustrates the results of passing a gas stream containing carbonyl sulfide over a benzyl amine-co-polystrene based recin produced by a phthalimide addition process.

As used in this specification and the appended claims, the singular forms "a", "an", and "the" include plural referents unless the content clearly dictates otherwise.

As used herein, sorption shall mean adsorption and/or absorption. And as used herein carbonyl-sulfide-form ion exchange resin shall mean an ion exchange resin, defined in claim 1 in which a portion of the sites available for sorption comprise carbonyl sulfide exchangeably bound thereto.

The bead polymers according to the present invention may comprise those formed of polystyrene polymer resins comprising primary amines and crosslinked via divinylaromatics such as, for example, aminomethylated polystyrene-codivinylbenzene (i.e., polybenzyl amine-co-divinylbenzene). Furthermore, the ion exchange resins according to the present invention may be monodisperse or heterodisperse and macroporous or gel-'types (microporous). Substances are described as monodisperse in the present application in which the uniformity coefficient of the distribution curve is less than or equal to 1.2. The uniformity coefficient Is the quotient of the sizes d60 and d10. d60 describes the diameter at which 60% by mass of those in the distribution curve are smaller and 40 % by mass are greater or equal. d10 designates the diameter at which 10% by mass in the distribution curve are smaller and 90% by mass are greater or equal.

Monodisperse bead polymers, the precursor of the corresponding monodisperse ion exchange resin, can be produced, for example, by bringing to reaction monodisperse, if desired, encapsulated, monomer droplets consisting of a monovinylaromatic compound, a polyvinylaromatic compound, and an initiator or initiator mixture, and if appropriate a porogen in aqueous suspension. To obtain macroporous bead polymers for producing macroporous ion exchangers, the presence of porogen is utilized.

The various production processes of monodisperse bead polymers both by the jetting principle and by the seed-feed principle are known to those skilled in the art. Reference is made to U.S. Pat. No. 4,444,961, EP-A 0 046 535, U.S. Pat. No. 4,419,245 and WO 93/121 67.

Monovinylaromatic unsaturated compounds used to prepare the ion exchange resin of the invention comprise compounds such as styrene, vinyltoluene, ethylstyrene, alphamethylstyrene, chlorostyrene or chloromethylstyrene. Polyvinylaromatic compounds (crosslinkers) used include divinyl-bearing aliphatic or aromatic compounds. For example, use is made of divinylbenzene, divinyltoluene, trivinylbenzene, ethylene glycol dimethacrylate, trimethylol propane trimethacrylate, hexa-1,5-diene, octa-1,7-diene, 2,5-dimethyl-1,5-hexadiene and also divinyl ether.

In addition to the use of aromatic monomers as the starting material for the polymeric ion exchange resin, for example, vinyl and vinylidene derivatives of benzene and vinyltoluene, ethylstyrene, alphamethyl-styrene, chlorostyrenes, and styrene, various non-aromatic vinyl and vinylidene compounds may also be employed. For example, acrylic acid, methacrylic acid, C₁-C₈ alkyl acrylates, C₁-C₈ alkyl methacrylates, acrylonitrile, methacrylonitrile, acrylamide, methacrylamide, vinyl chloride, vinylidene chloride, and vinyl acetate.

The subsequent functionalization of the bead polymer ion exchange resin thereby provides a functionalized ion exchange resin that is also generally known to those skilled in the art. For example, US 2006/0173083, describes a process for producing monodisperse, macroporous ion exchangers having weakly basic primary amine groups by what is termed the phthalimide process, comprising: a) reacting monomer droplets of at least one monovinylaromatic compound and at least one polyvinylaromatic compound and also a porogen and an initiator or an initiator combination to give a monodisperse crosslinked bead polymer, b) amidomethylating this monodisperse crosslinked bead polymer with phthalimide derivatives, and c) reacting the amidomethylated bead polymer to give a basic ion exchanger having aminomethyl groups in the form of primary amine groups.

A primary amine ion exchanger according to the invention may be produced by the above phthalimide addition process or by the chloromethylation process. As is generally known, the chloromethylation process is one in which a chloromethylate is formed that is subsequently reacted with amines to form an aminomethylated polymer. In one embodiment of the invention, the phthalimide addition process is utilized to produce the ion exchange resin. As a result of the phthalimide addition process for the production of the ion exchange resin, secondary crosslinking is limited as compared to the chloromethylation process. Such secondary crosslinking may occur during the chloromethylation process in which the primary amines of the aminomethylated polymer react to form secondary amines (secondary crosslinking). In one embodiment of the invention, such secondary crosslinking is less than 30% of the formed polymer, and in another embodiment such secondary crosslinking is less than 10%. In yet another embodiment, the secondary crosslinking is less than 5%.

The particle size of the bead polymer formed in the production processes, including those provided above, for example, may be set during polymerization, as well as the bead polymers sphericity. In one embodiment, bead polymers having a mean particle size of approximately 10 to 1000 µm are utilized. In another embodiment of the present invention, a mean particle size of approximately from 100 to 1000 µm is employed. In yet another embodiment, a mean particle size of approximately 100 to 700 µm is used. Further, the bead polymer of the invention may take the form of spherical polymer beads or non-spherical beads (or blocks). In one embodiment, spherical polymer beads are formed.

In one embodiment, the ion exchange resin utilized is a crosslinked, weakly basic, monodisperse, macroporous, spherical, anion exchange polystyrene based resin being functionalized with primary amine groups produced by the phthalimide addition process, for example that which is commercially available from LANXESS Deutschland GmbH under the brand name LEWATIT® VP OC1065.

In one embodiment of the present invention, the aforementioned ion exchange resin is contacted with a gas, gaseous stream, or a liquid stream comprising carbonyl sulfide resulting in the sorption of a portion of the carbonyl sulfide from the gas, gaseous stream, or liquid stream and, thereby, reducing the amount of carbonyl sulfide in the gas, gaseous stream, or liquid stream. Industrial sources are of particular applicability for the present invention.

Various areas for application of the present method of carbonyl sulfide removal from gas streams are made up of a myriad of processes, which may include such gas and gas streams from industrial sources. Industrial gas and/or industrial gas streams may comprise, *inter alia,* those of or from synthesis gas streams, as well as propane, propylene, ethane, and ethylene streams.

An example of chemical operations amenable to at least one embodiment of the instant invention is the purification of propylene used as feedstock for production of polypropylene and other industrial chemicals. The most common routes to propylene are the recovery of the C3 by-products of ethylene production (e.g., propane and/or propylene) through steam cracking and the recovery of the light hydrocarbon cuts from refinery operations of distillation and fluid catalytic cracking. For commercial use, propylene is normally produced to meet one of the following three grades; polymer grade, chemical grade and refinery grade. While the specifications for the three grades of propylene vary from region to region, the grades can be expected to be similar to the following typical specifications of major contaminants. There may be specifications for other components depending on the region and commercial contracts between buyer and seller.

| Table 1 | Polymer Grade | Chemical Grade |
|---|---|---|
| Propylene Content (% weight) | 99.5 minimum | 92 minimum |
| Ethane and Lighter (ppm weight) | 500 | 4000 |
| C4's and Heavier (ppm weight) | 7 | 2000 |
| Acetylenes and Propadiene (ppm Weight) | 5 | 100 |
| Total Sulfur Compounds (ppm weight) | 2 | 10 |
| Propane | Balance | Balance |

Refinery grade propylene can be considered the balance of industrially available propylene streams that do not meet either of the polymer grade or chemical grade specifications. Propylene is a major petrochemical precursor with polypropylene being the largest consumer. Other large scale chemicals produced from propylene include propylene oxide, acrylonitrile, acrylic acid and butanol. In smaller volumes, propylene is used to produce oxo alcohols, cumene for phenol and acetone production and ethylene propylene rubbers.

Another example of a chemical operation to which Applicant's inventive carbonyl sulfide removal processes may be employed is the production of synthesis gas during the manufacture of ammonia and other valuable products such as, for example, alcohols, aldehydes and other oxygenates. Synthesis gas is generally produced by the partial oxidation of hydrocarbons into hydrogen and carbon monoxide. Such partial oxidation may utilize air, steam or pure oxygen as sources of reactant oxygen and the process may be catalyzed or not. Synthesis gas will contain carbonyl sulfide. The amount of carbonyl sulfide present is dependent upon the amount of sulfur containing contaminants found in the feedstocks used for synthesis gas production. Instantly, the present invention may be utilized in which the ion exchange resins are used to remove and/or reduce the carbonyl sulfide.

Another example of a chemical operations to which Applicant's inventive carbonyl sulfide removal processes may be employed are those resulting from various chemical processing activities such as propylene, ethylene, butene or synthesis gas production or consumption, as well as that resulting from hydrocarbon fuel production or consumption, for example liquefied petroleum gas from natural gas production and/or petroleum refining.

As may be appreciated, other processes may exist, especially in industrial settings, which require the removal of carbonyl sulfide from gas, gaseous stream, or liquid streams. As such, the use of the presently disclosed ion exchange resin in accord with the above stated principles related thereto may be employed.

In yet another embodiment, the removal of carbonyl sulfide in industrial gases and/or liquids and/or fuel gases and/or liquids having a measurable concentration of carbonyl sulfide through use of the polybenzylamine ion exchange resin.

A non-limiting example of the suspected reaction of an aminoakylated polymer and carbonyl sulfide can be represented as follows wherein a polybenzylamine material is reacted with carbonyl sulfide yielding a poly-thiocarbamic acid compound:

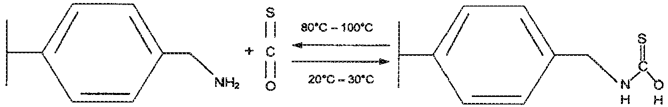

The primary amine ion exchange resin of the present invention can be used in fixed or fluidized beds. Regeneration to a carbonyl sulfide lean condition is through use of heat (designated as thermal swing adsorption (TSA)), vacuum (designated as pressure swing adsorption (PSA)) and/or a combination of heat and vacuum.

It has also been found that the use of partially dried primary amine ion exchange resin may have a greater ability to adsorb carbonyl sulfide and subsequently reduce regeneration energy requirements. While, as best understood, water does not take part in the above disclosed reactions, completely drying the ion exchange material can negatively affect the performance and thus an optimum moisture content may be employed.

Without being limited to any particular theory, completely drying the primary amine ion exchange resin may cause the micropores of the material to collapse, thereby, effectively stopping the resin's ability to adsorb carbonyl sulfide. Sorption performance, however, returns when the resin beads are rehydrated to between 5% by weight and 10% by weight water content, based on the total weight of the resin. Increasing the water content above 10% by weight does not enhance microporosity and unnecessarily increases regeneration heat requirements.

The poly-thiocarbamic acid compound of the reactions disclosed above are found to be unstable at slightly elevated temperatures. While a modicum amount of captured carbonyl sulfide can be recovered from the saturated primary amine ion exchange resin by reducing pressure, more efficient desorption can be effected by the application of heat, thereby raising the saturated resin temperature to approximately 100°C. At which point captured carbonyl sulfide will return to the gas phase within and around the resin beads and thence flow to an area of lower pressure. Greater pressure difference between the gas surrounding the warm resin beads and the down stream carbonyl sulfide dispersal area will increase the desorption efficiency and reduce the time required for regeneration. Hence, thermal swing operation supplemented with pressure swing adsorption constitutes the optimal process for carbonyl sulfide sorption. As mentioned earlier, regeneration carbonyl sulfide rich resin to the carbonyl sulfide lean resin form can be accomplished via the application of heat to the carbonyl sulfide rich resin to break the attraction/bonding between the resin and carbonyl sulfide. This heat can be delivered through convective, conductive or radiant heat transfer methods. The optimal choice of heat transfer will be determined by many factors that pertain to the physical limitations of the resin, the adsorption and regeneration processes and the quality and quantity of heat available as well as other considerations understood by those knowledgeable of the art.

As used herein carbonyl sulfide rich and carbonyl sulfide lean are generally understood to mean the condition where the ion exchange resin contains a relatively increased amount of carbonyl sulfide and the condition where the ion exchange resin contains a relatively reduced amount of carbonyl sulfide.

It should be appreciated, that the particle size, particle size distribution, and sphericity of the ion exchange resins are all factors that may be varied to contribute to optimal performance with respect to adsorption and desorption kinetics, as well as hydraulic characteristics in industrial applications. In the complete process comprising a sorption vessel and a desorption vessel, one may be a fixed bed and the other may be a fluidized bed.

In an embodiment of the present invention there is disclosed the need to dry the adsorbent prior to its use. For example, it may be understood that the polybenzylamine material can be regenerated with heat, thus lending itself to thermal swing adsorption. Heat requirements for regeneration of the resin are low due to the physical and chemical nature of the resin. On a weight basis, the resin will have roughly one quarter the heat requirements of water for a given temperature rise. Subsequently, a wet resin will require a greater amount of energy for regeneration because of the thermal requirements of water.

### EXAMPLES

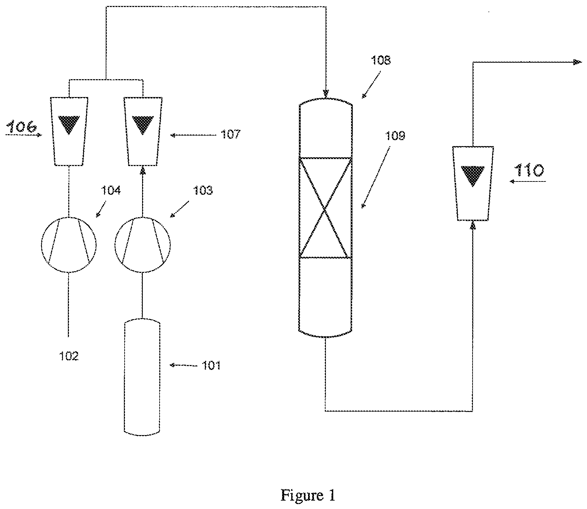

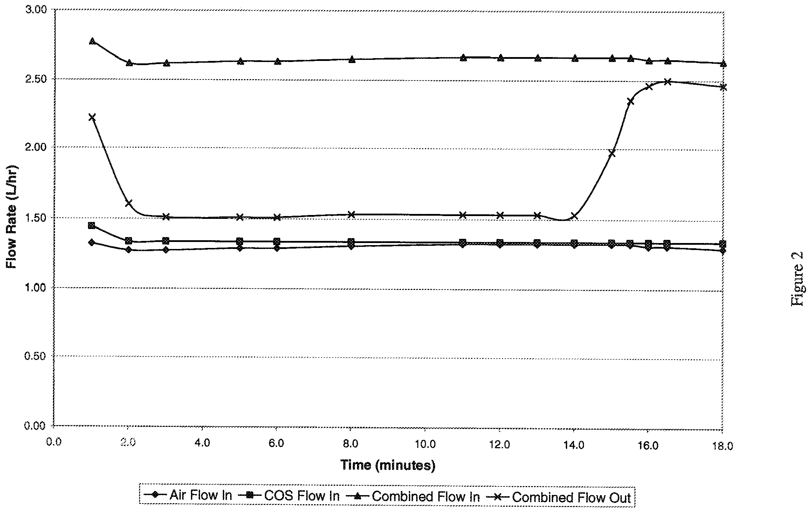

Various laboratory experiments were performed utilizing ion exchange resin material for the removal of carbonyl sulfide from gaseous streams. The laboratory test equipment is illustrated in Figure 1. The results of these experiments are summarized in Figure 2.

Referring to Figure 1, the is shown anapparatus for carbonyl sulfide adsorption testing.

Carbonyl sulfide gas is stored in pressurized gas cylinder 101 and fed to metering pump 103. Air 102 at atmospheric conditions is fed to metering pump 104. Individual volumetric flows of air and COS gas are measured in rotameters 106 and 107, respectively. The flows are combined and directed to reactor vessel 108. This reactor contains a fixed bed of benzyl amine co-polystyrene ion exchange resin 109. The ion exchange resin readily adsorbs carbonyl sulfide. The gas stream leaving reactor vessel 108 is measured by rotameter 110.

The reactor was charged with 5 grams of dried benzyl amine co-polystyrene resin. The commercially available resin used in the experiment is Lanxess Deutschland GmbH LEWATIT® VP OC1065. The volumetric flow rates of air and carbonyl sulfide were controlled to be approximately equal at 1.3 liters per hour.

The results are illustrated graphically in Figure 2. The outlet gas stream flow rate is markedly less than the inlet gas stream flow rate from around 3 minutes of operation until around 14 minutes of operation. The difference can be interpreted as the adsorption of carbonyl sulfide on the resin. By weighing the COSloaded resin, it was calculated that the resin adsorbed 0.006 gram moles of carbonyl sulfide.

## Claims

1. A process for removing carbonyl sulfide from a carbonyl sulfide containing stream, comprising:
contacting a benzylamine-co-polystyrene based weakly basic ion exchange resin with a carbonyl sulfide containing stream,
sorbing a portion of the carbonyl sulfide from the carbonyl sulfide containing stream by the benzylamine-co-polystyrene based weakly basic ion exchange resin, thereby forming a carbonyl-sulfide-form ion exchange resin, and
desorbing the attached carbonyl sulfide from the carbonyl-sulfide-form ion exchange resin by one of heat or heat and vacuum, thereby increasing the capacity of the resin to re-adsorb carbonyl sulfide.

2. The process according to Claim 1, wherein the carbonyl sulfide stream is a gaseous stream.

3. The process according to Claim 2, wherein the gaseous stream is from a synthesis gas streams or a light hydrocarbon gas stream.

4. The process according to Claim 3, wherein the light hydrocarbon gas steam is a propane, propylene, ethane, and/or ethylene gas stream.

5. The process according to Claim 1, wherein the carbonyl sulphide stream is a liquid stream.

6. The process according to Claim 5, wherein the liquid stream is a liquefied petroleum gas streams.

7. The process according to Claim 6, wherein the liquefied petroleum gas stream is a propane, propylene, ethane, and/or ethylene liquefied stream.

8. The process accordingly to Claim 1, wherein said weakly basic type ion exchange resin is a benzyl amine-co-polystrene based resin produced by a phthalimide addition process.

9. The process according to Claim 1, wherein the carbonyl sulfide sorbing and desorbing steps are primarily thermal swing driven operation steps.

10. The process according to Claim 1, wherein said ion exchange resin has a water content between 1 % by weight and 25 % by weight, based on the total weight of the resin.

11. The process according to Claim 1, wherein said ion exchange resin has a water content of greater than 5 % by weight and less than 15 % by weight, based on the total weight of the resin.

12. The process according to Claim 1, wherein the ion exchange resin comprises beads having a uniformity coefficient of the distribution less than or equal to 1.2, wherein the uniformity coefficient is the quotient of the sizes d60 and d10, d60 describes the diameter at which 60% by mass of those in the distribution curve are smaller and 40% by mass are greater or equal, d10 designates the diameter at which 10% by mass in the distribution curve are smaller and 90% by mass are greater or equal.

## Patentansprüche

1. Verfahren zum Entfernen von Carbonylsulfid aus einem Carbonylsulfid-enthaltenden Strom, umfassend:
Inkontaktbringen eines schwach basischen Ionenaustauschharzes auf Benzylamin-co-Polystyrol-Basis mit einem Carbonylsulfid-enthaltenden Strom,
Sorbieren eines Teils des Carbonylsulfids aus dem Carbonylsulfid-enthaltenden Strom durch das schwach basische Ionenaustauschharzes auf Benzylamin-co-Polystyrol-Basis, um ein Ionenaustauschharz in Carbonylsulfidform zu bilden, und
Desorbieren des gebundenen Carbonylsulfids von dem Ionenaustauschharz in Carbonylsulfidform durch eines von Wärme oder Wärme und Unterdruck, wodurch die Kapazität des Harzes, erneut Carbonylsulfid zu adsorbieren, erhöht wird.

2. Verfahren gemäß Anspruch 1, wobei der Carbonylsulfidstrom ein gasförmiger Strom ist.

3. Verfahren gemäß Anspruch 2, wobei der gasförmige Strom aus einem Synthesegasstrom oder einem Kohlenwasserstoff-Leichtgasstrom stammt.

4. Verfahren gemäß Anspruch 3, wobei der Kohlenwasserstoff-Leichtgasstrom ein Propan-, Propylen-, Ethan- und/oder Ethylengasstrom ist.

5. Verfahren gemäß Anspruch 1, wobei der Carbonylsulfidstrom ein flüssiger Strom ist.

6. Verfahren gemäß Anspruch 5, wobei der flüssige Strom ein verflüssigter Petroleumgasstrom ist.

7. Verfahren gemäß Anspruch 6, wobei der verflüssigte Petroleumgasstrom ein verflüssigter Propan-, Propylen-, Ethan- und/oder Ethylenstrom ist.

8. Verfahren gemäß Anspruch 1, wobei das schwach basische Ionenaustauschharz ein Harz auf Benzylamin-co-Polystyrol-Basis ist, das durch ein Phthalimid-Additionsverfahren hergestellt ist.

9. Verfahren gemäß Anspruch 1, wobei die Carbonylsulfid-Sorptions- und Desorptionsschritte vorwiegend temperaturwechselgetriebene Arbeitsschritte sind.

10. Verfahren gemäß Anspruch 1, wobei das Ionenaustauschharz einen Wassergehalt von zwischen 1 Gew.-% und 25 Gew.-%, bezogen auf das Gesamtgewicht des Harzes, aufweist.

11. Verfahren gemäß Anspruch 1, wobei das Ionenaustauschharz einen Wassergehalt von höher als 5 Gew.-% und weniger als 15 Gew.-%, bezogen auf das Gesamtgewicht des Harzes, aufweist.

12. Verfahren gemäß Anspruch 1, wobei das Ionenaustauschharz Perlen mit einem Gleichmäßigkeitskoeffizienten der Verteilung von kleiner als oder gleich 1,2 umfasst, wobei der Gleichmäßigkeitskoeffizient der Quotient der Größen d60 und d10 ist, wobei d60 den Durchmesser angibt, bei dem 60 Masse-% in der Verteilungskurve kleiner sind und 40 Masse-% größer oder gleich sind, und d10 den Durchmesser angibt, bei dem 10 Masse-% in der Verteilungskurve kleiner sind und 90 Masse-% größer oder gleich sind.

## Revendications

1. Procédé de retrait du sulfure de carbonyle d'un flux contenant du sulfure de carbonyle, comprenant :
la mise en contact d'une résine d'échange d'ions de benzylamine-co-polystyrène faiblement basique avec un flux contenant du sulfure de carbonyle,
la sorption d'une partie du sulfure de carbonyle à partir du flux contenant du sulfure de carbonyle par la résine d'échange d'ions de benzylamine-co-polystyrène faiblement basique, de façon à former une résine d'échange d'ions sous forme de sulfure de carbonyle, et
la désorption du sulfure de carbonyle lié à partir de la résine d'échange d'ions sous forme sulfure de carbonyle par l'un parmi la chaleur et le vide, de façon à augmenter la capacité de la résine à réadsorber le sulfure de carbonyle.

2. Procédé selon la revendication 1, dans lequel le flux de sulfure de carbonyle est un flux gazeux.

3. Procédé selon la revendication 2, dans lequel le flux gazeux est d'un flux de gaz de synthèse ou un flux de gaz d'hydrocarbure léger.

4. Procédé selon la revendication 3, dans lequel le flux de gaz d'hydrocarbure léger est un flux de gaz de propane, propylène, éthane, et/ou éthylène.

5. Procédé selon la revendication 1, dans lequel le flux de sulfure de carbonyle est un flux liquide.

6. Procédé selon la revendication 5, dans lequel le flux liquide est un flux de gaz de pétrole liquéfié.

7. Procédé selon la revendication 6, dans lequel le flux de gaz de pétrole liquéfié est un flux liquéfié de propane, de propylène, d'éthane, et/ou d'éthylène.

8. Procédé selon la revendication 1, dans lequel ladite résine d'échange d'ions de type faiblement basique est une résine à base de benzylamine-co-polystyrène produite par un procédé d'addition de phtalimide.

9. Procédé selon la revendication 1, dans lequel les étapes de sorption et de désorption de sulfure de carbonyle sont principalement des étapes d'opération à modulation de température.

10. Procédé selon la revendication 1, dans lequel ladite résine d'échange d'ions a une teneur en eau comprise entre 1 % en poids et 25 % en poids, sur la base du poids total de la résine.

11. Procédé selon la revendication 1, dans lequel ladite résine d'échange d'ions a une teneur en eau supérieure à 5 % en poids et inférieure à 15 % en poids, sur la base du poids total de la résine.

12. Procédé selon la revendication 1, dans lequel la résine d'échange d'ions comprend des billes ayant un coefficient d'uniformité de la distribution inférieur ou égal à 1, dans lequel le coefficient d'uniformité est le rapport des tailles d60 et d10, d60 décrit le diamètre auquel 60 % en masse de celles-ci dans la courbe de distribution sont plus petites et 40 % en masse sont supérieures ou égales, d10 désigne le diamètre auquel 10 % en masse dans la courbe de distribution sont plus petites et 90 % en masse sont plus grandes ou égales.
